(19) Europäisches Patentamt
European Patent Office
Office européen des brevets

(11) Veröffentlichungsnummer : **0 392 356 B1**

(12) # EUROPÄISCHE PATENTSCHRIFT

(45) Veröffentlichungstag der Patentschrift : **27.10.93 Patentblatt 93/43**

(51) Int. Cl.$^5$ : **C09B 11/28,** G03G 9/09

(21) Anmeldenummer : **90106521.9**

(22) Anmeldetag : **05.04.90**

(54) **Xanthenfarbstoffe für elektrophotographische Aufzeichungsverfahren.**

(30) Priorität : **13.04.89 DE 3912085**

(43) Veröffentlichungstag der Anmeldung : **17.10.90 Patentblatt 90/42**

(45) Bekanntmachung des Hinweises auf die Patenterteilung : **27.10.93 Patentblatt 93/43**

(84) Benannte Vertragsstaaten : **CH DE FR GB IT LI**

(56) Entgegenhaltungen :
**EP-A- 0 167 998**
**EP-A- 0 248 176**
**DE-A- 2 138 179**
**JP-A- 5 280 839**
**JP-A-57 130 044**

(73) Patentinhaber : **BASF Aktiengesellschaft**
**Carl-Bosch-Strasse 38**
**D-67063 Ludwigshafen (DE)**

(72) Erfinder : **Breitschaft, Walter, Dr.**
**Eichelbergstrasse 1**
**D-6800 Mannheim 1 (DE)**
Erfinder : **Bruder, Horst, Dr.**
**Dubliner Strasse 25**
**D-6700 Ludwigshafen (DE)**
Erfinder : **Mayer, Udo, Dr.**
**Max-Slevogt-Strasse 17**
**D-6710 Frankenthal (DE)**
Erfinder : **Schroeder, Gunter-Rudolf, Dr.**
**Wredestrasse 71**
**D-6700 Ludwigshafen (DE)**

EP 0 392 356 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Elektrophotographische Aufzeichnungsverfahren beruhen auf einer gezielten teilweisen Entladung einer gleichmäßig aufgeladenen, photoleitenden Schicht durch Belichtung mittels Projektion bzw. Laserstrahl. Das so erzeugte latente Ladungsbild wird mit einem flüssigen oder pulverförmigen Toner entwickelt, wobei dieser an den geladenen (d.h. unbelichteten) Stellen der Halbleiterschicht haftet. Der Toner kann auf ein Aufzeichnungsmedium, z.B. Papier oder Folie, übertragen und dort fixiert werden. Dies erfolgt in der Regel durch Wärmebehandlung.

Der Toner besteht hauptsächlich aus einem schmelzbaren Harz, einem Farbstoff bzw. Pigment und ggf. einem Ladungsstabilisator. Neben schwarzen kommen in letzter Zeit verstärkt farbige Toner zum Einsatz.

Die JP-A-13 00 44/1982 beschreibt einen Magenta-Toner mit C.I. Solvent Red 49 (Rhodamin B Base) und C.I. Solvent Red 52. Diese Farbstoffe sind zwar im Tonerharz gut löslich und transparent, verfügen jedoch nicht über ausreichende Lichtechtheiten. Die JP-A-8 08 39/1977 beschreibt Toner, die verlackte Magentafarbstoffe der Formel

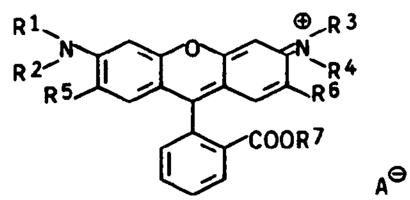

enthalten, worin $A^{\ominus}$ ein Wolfram-Molybdatophosphatanion ist. Andere Anionen werden nicht erwähnt. Derartige Lackpigmente sind wegen ihrer Unlöslichkeit ungünstig.

In der EP-A-0 24 81 76 wird ein Toner beansprucht, der einen Rhodaminfarbstoff und einen Quencher zur Unterdrückung der störenden Fluoreszenz enthält.

Als Anionen fungieren einerseits Trifluormethansulfonat, Hexafluorophosphat und Perchlorat, deren Salze bzw. Säuren arbeitshygienisch und sicherheitstechnisch problematisch sind und andererseits Naphthalindisulfonat, p-Toluolsulfonat, m-Nitrobenzolsulfonat und m-Aminobenzolsulfonat, die Farbstoffe ergeben, welche zu Tonern mit ungenügender Lichtechtheit führen.

Aufgabe der vorliegenden Erfindung war es, Rhodamin-Farbstoffe von hoher Lichtechtheit, reinem Farbton und hoher Farbstärke für die Verwendung in elektrophotographischen Tonern bereitzustellen. Die eingesetzten Stoffe sollten dabei technisch gut handhabbar und physiologisch unbedenklich sein.

Die Erfindung betrifft Xanthenfarbstoffe der Formel I

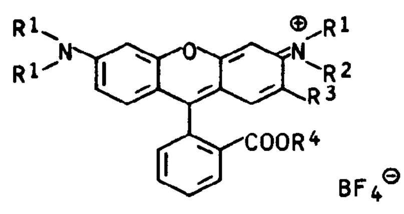

(I),

in der

$R^1$ für Methyl, Ethyl oder

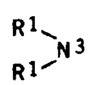

für Pyrrolidino, Piperidino oder Morpholino,

$R^2$ für Wasserstoff, Methyl oder Ethyl,

$R^3$ für Wasserstoff, Methyl und

$R^4$ für Wasserstoff, $C_1$-$C_4$-Alkyl stehen, wobei, wenn $R^2$ Methyl oder Ethyl ist, $R^4$ für $C_1$-$C_4$-Alkyl steht.

Von besonderer Bedeutung sind Verbindungen der Formel I, in denen

$R^1$ Methyl oder Ethyl,

$R^2$ Methyl oder Ethyl,

$R^3$ Wasserstoff und

$R^4$ $C_1$- bis $C_4$-Alkyl sind,
sowie Verbindungen, bei denen
$R^1$ Methyl oder Ethyl,
$R^2$ Wasserstoff,
$R^3$ Methyl und
$R^4$ Wasserstoff und $C_1$- bis $C_4$-Alkyl sind.

Die Xanthenfarbstoffe I dienen zur Herstellung von Tonern.

Die erfindungsgemäßen Verbindungen und gegebenenfalls ein Ladungsstabilisator werden in Tonerharz eingearbeitet. Die Herstellung solcher Toner ist bekannt.

Die Xanthenfarbstoffe wurden nach bekannten Verfahren hergestellt. Die unsymmetrischen Verbindungen wurden dabei analog der EP-A-0 16 79 98, Beispiel 23 durch Kondensation der entsprechenden Benzoylbenzoesäuren mit m-Aminophenolderivaten in konzentrierter Schwefelsäure gewonnen.

Die Herstellung der Ester mit $R^4$ = Alkyl erfolgte durch Umsetzen der Farbstoffe mit $R^4$ = H mit Dimethylsulfat bzw. Diethylsulfat in Dichlorbenzol.

Die folgenden Beispiele sollen die Erfindung zusätzlich erläutern.

Beispiel 1

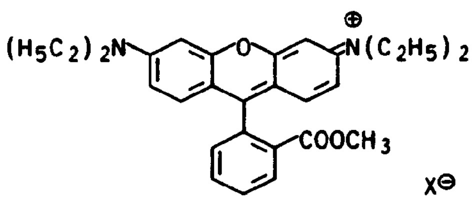

1: $X^{\ominus}$ = Cl
2: $X^{\ominus}$ = $BF_4$

Zu einer Lösung von 24,63 g des Farbstoffs 1 in 750 ml Wasser ließ man innerhalb 1 Stunde 8,45 g Natriumtetrafluoroborat gelöst in 110 ml Wasser zutropfen. Nach zwei Stunden wurde der ausgefallene Feststoff abgesaugt und mit Wasser gewaschen. Der Rückstand wurde in Ether gerührt, abgesaugt und getrocknet. Man isolierte so 26 g (95 %) des Farbstoffs der Formel 2. $C_{29}H_{33}BF_4N_2O_3$ (543,8)
ber.: B 2,0 F 13,9 gef.: B 1,9 F 13,9

Analog Beispiel 1 wurden die in der nachfolgenden Tabelle 1 genannten Farbstoffe hergestellt.

Tabelle 1

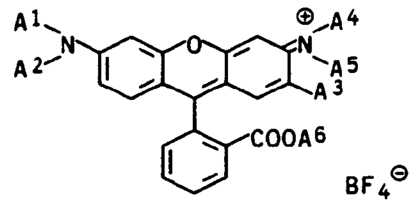

| Bsp.-Nr. | $A^1$ | $A^2$ | $A^3$ | $A^4$ | $A^5$ | $A^6$ |
|---|---|---|---|---|---|---|
| 2 | Et | Et | H | Et | Et | Et |
| 3 | Me | Me | H | Me | Me | Me |
| 4 | $-C_4H_8-$ | | H | Et | Et | Me |
| 5 | $-C_2H_4OC_2H_4-$ | | H | Et | Et | Me |
| 6 | $-C_2H_4OC_2H_4-$ | | H | $-C_2H_4OC_2H_4-$ | | Me |
| 7 | Me | Me | H | Et | Et | Et |
| 8 | Et | Et | Me | Et | H | H |
| 9 | Et | Et | Me | Et | H | Me |
| 10 | Et | Et | Me | Et | H | Et |
| 11 | $-C_2H_4OC_2H_4-$ | | Me | Et | H | H |
| 12 | $-C_2H_4OC_2H_4-$ | | Me | Et | H | Me |
| 13 | $-C_2H_4OC_2H_4-$ | | Me | Et | H | Et |
| 14 | $-C_4H_8-$ | | Me | Et | H | H |

## Patentansprüche

1. Xanthenfarbstoffe der Formel I

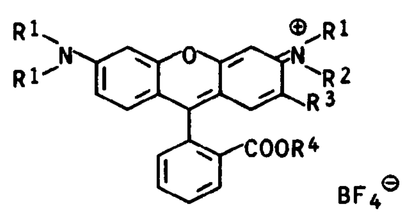

(I),

in der

$R^1$ für Methyl, Ethyl oder

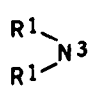

für Pyrrolidino, Piperidino oder Morpholino,

$R^2$ für Wasserstoff, Methyl oder Ethyl,

$R^3$ für Wasserstoff, Methyl und

$R^4$ für Wasserstoff, $C_1$-$C_4$-Alkyl stehen,

wobei, wenn $R^2$ Methyl oder Ethyl ist, $R^4$ für $C_1$-$C_4$-Alkyl steht.

**2.** Xanthenfarbstoffe gemäß Anspruch 1, zur Herstellung von Tonern.

## Claims

**1.** A xanthene dye of the formula I

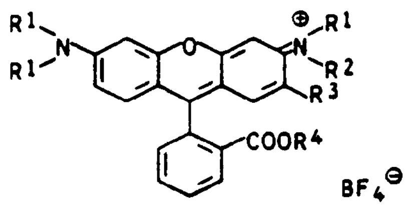

(I)

where

$R^1$ is methyl or ethyl or

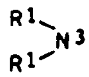

is pyrrolidino, piperidino or morpholino,

$R^2$ is hydrogen, methyl or ethyl,

$R^3$ is hydrogen or methyl and

$R^4$ is hydrogen or $C_1$-$C_4$-alkyl,

with the proviso that when $R^2$ is methyl or ethyl, $R^4$ is $C_1$-$C_4$-alkyl.

**2.** A xanthene dye as claimed in claim 1 for preparing toners.

## Revendications

**1.** Colorants de la série du xanthène de formule I

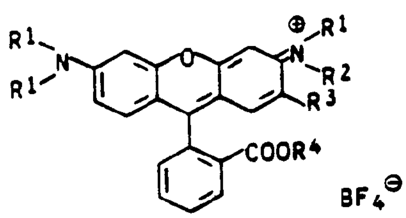

(I),

dans laquelle

$R^1$ est mis pour un reste méthyle, éthyle ou

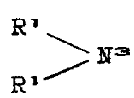

est mis pour un reste pyrrolidino, pipéridino ou morpholino,

$R^2$ est mis pour un atome d'hydrogène ou pour un reste méthyle ou éthyle,

$R^3$ est mis pour un atome d'hydrogène ou pour un reste méthyle et

$R^4$ est mis pour un atome d'hydrogène ou pour un reste alkyle en $C_1$-$C_4$, $R^4$ étant mis pour un reste alkyle en $C_1$-$C_4$ lorsque $R^2$ est un reste methyle ou éthyle.

**2.** Colorants de la série du xanthène selon la revendication 1 pour la préparation de toners.